# EUROPEAN PATENT SPECIFICATION

(11) **EP 3 105 713 B1**
(45) Date of publication and mention of the grant of the patent: **30.09.2020**
(21) Application number: 15748561.6
(22) Date of filing: 12.02.2015
(51) Int. Cl.: G06K 9/36, G06K 9/62, G06T 7/00, H04N 5/235, H04N 5/225

(54) **SYSTEM AND METHOD FOR GENERATING A DIGITAL IMAGE**
SYSTEM UND VERFAHREN ZUR ERZEUGUNG EINES DIGITALEN BILDES
SYSTÈME ET PROCÉDÉ PERMETTANT DE GÉNÉRER UNE IMAGE NUMÉRIQUE

(30) Priority: 12.02.2014 US 201414178305
(43) Date of publication of application: 21.12.2016
(73) Proprietor: DueLight LLC, Sunnyvale, CA 94087 (US)
(72) Inventor: Rivard, William, Menlo Park, CA 94025 (US); Feder, Adam, Mountain View, CA 94043 (US); Kindle, Brian, Sunnyvale, CA 94087 (US)
(74) Representative: Perry, Clifford
(86) International application number: PCT/US2015/015691
(87) International publication number: WO 2015/123455

(56) References cited:
- US-A1- 2004 119 875
- US-A1- 2006 067 667
- US-A1- 2008 297 460
- US-A1- 2008 317 357
- US-A1- 2009 160 944
- US-A1- 2009 175 555
- US-A1- 2010 172 588
- US-B2- 8 189 097

## Description

### FIELD OF THE INVENTION

Embodiments of the present invention relate generally to digital photographic systems, and more specifically to a system, method, and computer program product for generating a digital image.

### BACKGROUND

A typical digital camera focuses an optical image of a scene onto an image sensor, which samples the optical image to generate an electronic representation of the scene. The electronic representation is then processed and stored as a digital photograph. In many common scenarios, insufficient ambient illumination is available to enable the image sensor to generate the electronic representation with a sufficient signal-to-noise ratio in regions of interest within the scene. An insufficient signal-to-noise ratio can yield a digital photograph littered with chromatic noise, speckles, and other displeasing visual artifacts that reduce image quality.

To overcome insufficient ambient illumination, many digital cameras include an illuminator device, such as a light-emitting diode (LED) strobe. Light from the illuminator device may provide proper overall illumination, too little illumination, or too much illumination, as a function of depth, object reflectivity, and camera exposure parameters. A conventional digital camera attempts to balance exposure for objects that are brightly illuminated by the illuminator device with other objects, such as distant background objects illuminated almost exclusively by ambient illumination. One problem with conventional strobe exposure techniques is that foreground objects tend to be highly over-exposed, while more distant objects may be properly-exposed or under-exposed. In some cases, foreground objects are over-exposed to the extent of exceeding the dynamic range of the image sensor, leading to "burn out" of certain regions within a scene. For example, LED illuminators commonly over-expose human faces for digital photographs taken in social settings, where the faces actually comprise subject matter of interest in the photograph.

As the foregoing illustrates, there is a need for addressing photographic exposure in conjunction with strobe illumination and/or other related issues associated with the prior art.

US patent 8 189 097 B2 discloses a method for adjusting flash intensity of a flash lamp in an image capture apparatus, where two pre-flash images corresponding the object are retrieved under two different pre-flash lights, respectively, and then a flash intensity of main-flash light is calculated according to one of the retrieved pre-flash images, so as to retrieve a main-flash image corresponding the object under the main-flash light with the calculated main-flash light.

Published US patent application US 2009/0175555 A1 discloses an imaging system includes an imaging device, a camera, a light source and a user interface. A corresponding method includes the operations of capturing a digital image, analyzing the digital image to determine if light is evenly distributed and adjusting at least one light and recapturing the image if light is not evenly distributed.

Published US patent application US 2006/0067667 A1 discloses an apparatus provided with a light-emitting control unit for generating an electric signal for controlling a flash light-emitting operation for each photographing operation in plural operations of bracket photographing, a light-emitting unit including plural flash light tubes disposed at different positions respectively, and main capacitors provided for the flash light tubes respectively, and a light-emitting member driving unit for making the plural flash light-emitting tubes separately to emit light or cease emitting light. The light-emitting member driving unit controls the light-emitting position or light-emitting angle of the light-emitting unit based on the electric signal from the light-emitting control unit, and charges a main capacitor for a flash light-emitting member while other flash light-emitting tube is emitting light.

Published US patent application US 2004/0119875 A1 discloses a method for selecting image data for output, the method including the operation of analyzing at least one of the image data and image generation record information to determine an image quality parameter relating to image quality. The method further includes making an output target decision regarding selection of image data as an output target is performed on the basis of the image quality parameter.

### SUMMARY

The invention is defined by the independent claims. Preferred embodiments are listed in the dependent claims.

The use of the word "embodiment" below in this description merely implies the illustration of examples or exemplary embodiments, if not otherwise defined by the appended claims. The scope of the invention if thus defined only by the appended claims.

### BRIEF DESCRIPTION OF THE DRAWINGS

So that the manner in which the above recited features of the present invention can be understood in detail, a more particular description of the invention, briefly summarized above, may be had by reference to embodiments, some of which are illustrated in the appended drawings.
Figure **1A** illustrates a flow chart of a method for generating an image set comprising two or more images sampled under strobe illumination, in accordance with one embodiment;
Figure **1B** illustrates a flow chart of a method for selecting one image from an image set based on exposure quality, in accordance with one embodiment;
Figure **2A** illustrates a digital camera, configured to implement one or more aspects of the present invention;
Figure **2B** illustrates a mobile device, configured to implement one or more aspects of the present invention;
Figure **3A** illustrates a digital photographic system, configured to implement one or more aspects of the present invention;
Figure **3B** illustrates a processor complex within the digital photographic system, in accordance with one embodiment;
Figure **4A** illustrates a linear profile for a strobe intensity function associated with sampling an image set, in accordance with one embodiment;
Figure **4B** illustrates a range-limited profile for a strobe intensity function associated with sampling an image set, in accordance with one embodiment;
Figure **4C** illustrates an adaptive profile for a strobe intensity function associated with sampling an image set, in accordance with one embodiment;
Figure **4D** illustrates a range-limited profile for a strobe intensity function and a monotonic profile for an exposure parameter function associated with sampling a set of digital photographs, in accordance with one embodiment;
Figure **4E** illustrates a range-limited profile for a strobe intensity function and a non-monotonic profile for an exposure parameter function associated with sampling a set of digital photographs, in accordance with one embodiment;
Figure **4F** illustrates a constant intensity profile for a strobe intensity function and a monotonic profile for exposure parameter function associated with sampling a set of digital photographs, in accordance with one embodiment;
Figure **4G** illustrates a range-limited profile for a strobe intensity function based on variable width pulses, in accordance with one embodiment;
Figure **4H** illustrates determining a range for a range-limited profile, in accordance with one embodiment;
Figure **5A** illustrates a viewer application configured to generate a resulting image based on an image set, in accordance with one embodiment;
Figure **5B** illustrates an exemplary user interface associated with a viewer application, in accordance with one embodiment;
Figure **5C** illustrates a resulting image with differing levels of strobe exposure, in accordance with one embodiment;
Figure **5D** illustrates a resulting image generated from source images and a selection depth map, in accordance with one embodiment;
Figure **5E** illustrates a selection depth map relative to a stack of source images, in accordance with one embodiment; and
Figure **5F** illustrates specifying a selection depth map, in accordance with one embodiment.

### DETAILED DESCRIPTION

Embodiments of the present invention enable a digital photographic system to generate a digital image (or simply "image") of a photographic scene subjected to strobe illumination. Exemplary digital photographic systems include, without limitation, digital cameras and mobile devices such as smart phones that are configured to include a digital camera module and a strobe unit. A given photographic scene is a portion of an overall scene sampled by the digital photographic system.

Two or more images are sequentially sampled by the digital photographic system to generate an image set. Each image within the image set is generated in conjunction with different strobe intensity, different exposure parameters, or a combination thereof. Exposure parameters may include sensor sensitivity ("ISO" parameter), exposure time (shutter speed), aperture size (f-stop), and focus distance. In certain embodiments, one or more exposure parameters, such as aperture size, may be constant and not subject to determination. For example, aperture size may be constant based on a given lens design associated with the digital photographic system. At least two of the images comprising the image set are sampled in conjunction with a strobe unit, such as a light-emitting diode (LED) strobe unit, configured to contribute illumination to the photographic scene.

In one embodiment, exposure parameters are initially determined and held constant for each image in the image set. The exposure parameters may be initially determined based on ambient lighting conditions. If insufficient ambient lighting is available, such as for extremely dark scenes, then exposure parameters may be determined based on a mid-range strobe intensity. For example, mid-range strobe intensity may be selected as fifty-percent of a maximum strobe intensity for the strobe unit. The strobe unit is configured to modulate strobe intensity to provide a range of illumination contribution among the images within the image set. For example, the image set may comprise ten images, each with monotonically increasing illumination from the strobe unit. The first of ten images within the image set may be relatively under-exposed with respect to strobe illumination, while the tenth image may be over-exposed with respect to strobe illumination. However, one or more images between the first image and the tenth image will likely be appropriately-exposed with respect to strobe illumination. An image with appropriate illumination may be selected automatically or manually selected by a user. The image with appropriate illumination is then a resulting image for the photographic scene.

In another embodiment, images within the image set are sampled according to varying exposure parameters while the strobe unit is enabled to illuminate the photographic scene. One or more of the exposure parameters may be varied among sequential images comprising the image set. For example, exposure time may be increased (or decreased) among sequential images within the image set. Alternatively, sensor sensitivity may be increased (or decreased) among sequential images within the image set. Furthermore, two or more of the exposure parameters may be varied together among sequential images comprising the image set. For example, exposure time may be decreased while sensor sensitivity is increased. The net effect may preserve overall exposure, while decreasing blur as strobe intensity increases and exposure time decreases. As strobe intensity increases, sensor sensitivity may be increased. Because subject illumination in the photographic scene increases as the strobe intensity increases, increasing sensor sensitivity in sequential images will not likely introduce substantial additional image noise.

Sequential images may be sampled rapidly relative to motion and changes within the photographic scene. For example, the sequential images may be sampled at a rate of at least five sampled per second. In high performance systems, the images may be sampled at greater than fifty samples per second. With an inter-image time of less than two-hundred milliseconds, each image within the image set will depict substantially identical subject matter in common photographic scenarios. In one embodiment, the strobe unit is configured to modulate strobe intensity in time-synchronization with respect to image sampling. For example, the strobe unit may be configured to maintain a specified first strobe intensity during an exposure time for a first image in the image set and maintain a second strobe intensity during an exposure time of a second image in the image set. A transition from the first strobe intensity to the second strobe intensity is synchronized in time with completion of sampling the first image and initiating sampling of the second image.

In one embodiment, an image is selected from the image set based on exposure metrics generated for each image within the image set. In another embodiment, an image is selected by a user. An image may be recommended to the user based on the exposure metrics, but the user may select a different image based on individual choice. The user may view each image in the image set and select the image through a viewer system, configured to present the image set as a sequence of images that may be browsed using a continuous position control, such as a slider control.

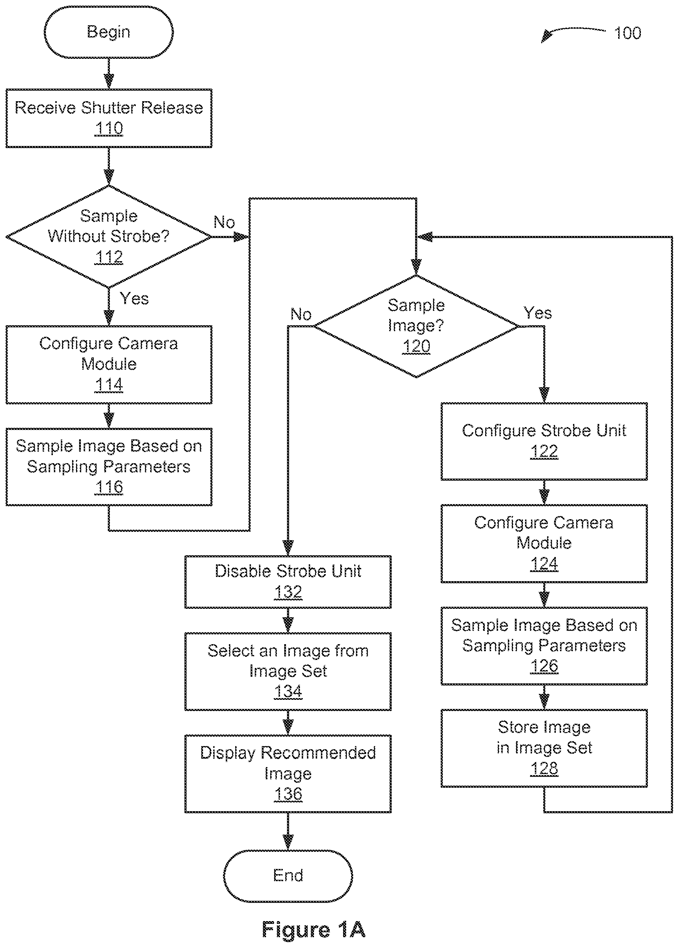

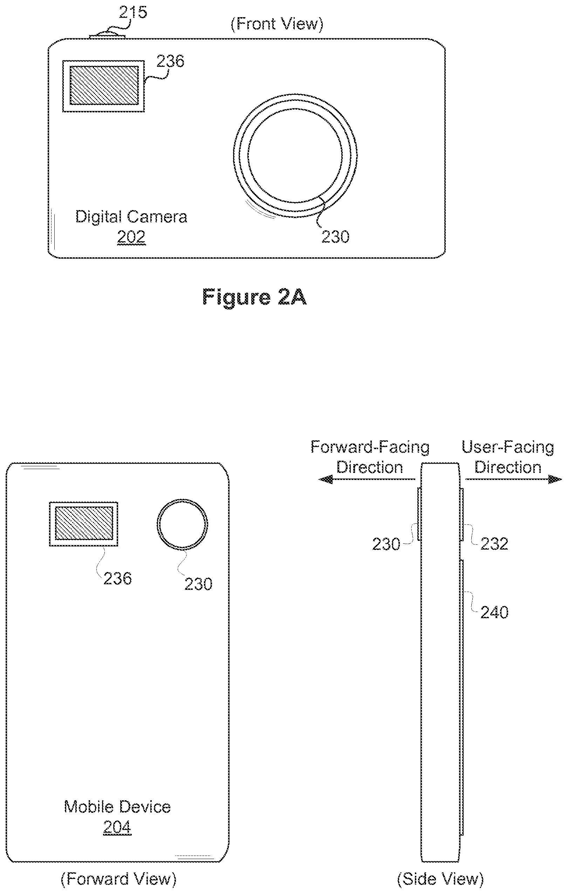

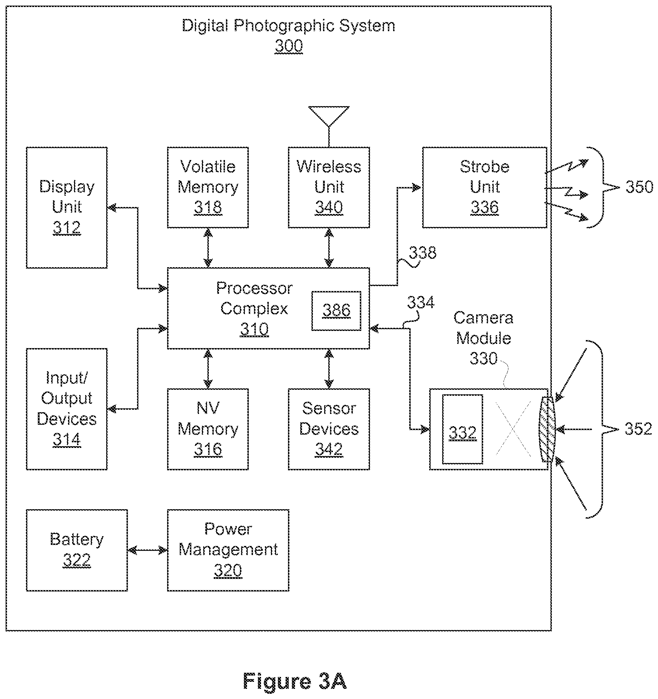

Figure **1A** illustrates a flow chart of a method **100** for generating all image set comprising two or more images sampled under strobe illumination, in accordance with one embodiment. Although method **100** is described in conjunction with the systems of Figures **2A-3B**, persons of ordinary skill in the art will understand that any system that performs method **100** is within the scope and spirit of embodiments of the present invention. In one embodiment, a digital photographic system, such as digital photographic system **300** of Figure **3A**, is configured to perform method **100.** The digital photographic system may be implemented within a digital camera, such as digital camera **202** of Figure **2A**, or a mobile device, such as mobile device **204** of Figure **2B****.**

Method **100** begins in step **110**, where the digital photographic system receives a shutter release command. The shutter release command may be generated explicitly by a user pressing a physical button or virtual button, or the shutter release command may be generated by a timer, motion sensor, voice control, remote control, or any other technically feasible mechanism.

If, in step **112**, one or more images should be sampled without strobe illumination, then method **100** proceeds to step **114.** In certain configurations, one or more images may be sampled without strobe illumination and added to the image set. An image sampled without strobe illumination is referred to herein as an ambient image. For certain photographic scenes, an ambient image may represent a better choice for a resulting image than other images within the image set sampled with strobe illumination. In certain implementations, whether to sample an ambient image is a design decision that applies to all image sets. In other implementations, a decision to sample an ambient image is made by a user and indicated through a user interface (UI) control. In still other implementations, a decision to sample an ambient image is made automatically based on photographic scene illumination conditions; for example, if the photographic scene is sufficiently dark, then no ambient image is sampled.

In step **114**, the digital photographic system configures a camera module, such as camera module **330**, to sample an ambient image according to ambient illumination conditions. Configuring the camera module may include determining exposure parameters for a current photographic scene and transmitting the exposure parameters to the camera module. In certain embodiments, the camera module determines exposure parameters for the photographic scene, such as in response to a command to meter a scene. Sampling parameters include the exposure parameters and strobe parameters, which include strobe intensity and may include strobe color. The strobe unit is disabled in this step and corresponding strobe parameters may be set to reflect that the strobe unit is disabled.

In step 116, the digital photographic system samples one or more ambient images based on the sampling parameters. In one embodiment, the one or more ambient images are sampled in conjunction with an exposure parameter sweep, such as an exposure time sweep. The one or more ambient images may be stored within the image set or combined to generate one or more high-dynamic range (HDR) images, which may be stored within the image set. In certain embodiments, the one or more HDR images are stored within the image set, but the one or more ambient images are not.

Returning to step **112**, if one or more images should not be sampled without strobe illumination, then the method **100** proceeds to step **120.**

If, in step **120**, an image should be sampled, then the method **100** proceeds to step **122.** A given image set should comprise at least two images sampled with strobe illumination. An image should be sampled if another image is needed to complete a given image set. In one embodiment, the image set comprises a fixed number of images, and another image should be sampled until the fixed number of images has been sampled. In other embodiments, the image set comprises a variable number of images, the number of images being determined adaptively based on exposure of sampled images comprising the image set. For example, the number of images may continue to increase, up to a maximum number of images, until an image having proper exposure is sampled in conjunction with varying the sampling parameters. Once the image having proper exposure is sampled, another image need not be sampled.

In step **122**, the digital photographic system configures the strobe unit based on strobe parameters. Configuring the strobe unit may include enabling the strobe unit to generate illumination according to the strobe parameters. The strobe parameters specify a strobe intensity function that defines strobe intensity as a function corresponding to the images within the image set. In one embodiment, the strobe intensity function defines a predetermined strobe intensity for sequential images within the image set. In another embodiment, the strobe intensity function adaptively generates strobe intensity corresponding to a given image based on at least one previously sampled image or a previously determined exposure.

In certain embodiments, the strobe parameters specify a strobe illumination color, which may be specified as a ratio of red, green, and blue intensity, a color temperature, a color hue, or any other technically feasible color specification. When enabled, the strobe unit is configured to generate strobe illumination according to the specified strobe illumination color. In one embodiment, an ambient illumination color measurement is performed to determine which color to specify as a strobe illumination color. Any technically feasible technique may be implemented to perform the ambient illumination color measurement, including, without limitation, scene color averaging techniques, illuminator color detection techniques, and the like. Measurement data comprising image frames may be collected by a digital camera module. By causing the strobe unit to generate strobe illumination that is consistent in color with ambient illumination, subjects within the photographic scene that are substantially illuminated by the strobe illumination may appear to have proper and consistent color relative to other objects in the scene that are instead substantially illuminated by ambient illumination sources.

In step **124**, the digital photographic system configures the camera module to be ready to sample an image according to exposure parameters, which may be determined once and applied to each image within the image set sampled with strobe illumination, or determined per image within the image set based on an exposure parameter function for the image set. Configuring the camera module may include writing registers within the camera module according to the exposure parameters.

The digital camera module includes an image sensor with a sensor sensitivity ranging from low-sensitivity (an ISO value of 100 or less) for generally bright photographic scenes to high-sensitivity (an ISO value of 1600 or more) for generally dark photographic scenes. Exposure time may range from one millisecond or less to more than a second. Determining exposure parameters typically comprises finding a combination of at least sensor sensitivity and exposure time that is estimated to be appropriate for a given intensity distribution, absolute overall scene brightness, or any combination thereof. The camera module may adaptively sample multiple image frames in finding the combination. As sensitivity is increased and/or exposure time is increased, image noise also increases. Image quality degradation due to noise typically establishes a combination of maximum exposure time and maximum sensitivity that should not be exceeded. If sufficient ambient illumination is not available, the digital camera module is unable to sample a usable image, and in some cases may simply generate a dark noise field. A certain implementation or design of a digital camera module may have better low-light performance than another implementation or design, and therefore a determination of whether sufficient ambient illumination is available is implementation-dependent.

In one embodiment, the exposure parameters are determined based on ambient illumination. Any technically feasible technique may be implemented to determine the exposure parameters. Persons skilled in the art will understand that such techniques are well-known in the art and, in certain scenarios, depend on a specific implementation of a digital photographic system.

In another embodiment, the exposure parameters are determined based on ambient illumination if sufficient ambient illumination is available or determined based on metering strobe illumination if sufficient ambient illumination is not available. The metering strobe illumination is provided by the strobe unit (or a similar unit), configured to provide mid-range strobe intensity while the exposure parameters are being determined. Alternatively, the strobe unit may be configured to provide a range of strobe intensity to provide a larger search space for determining exposure parameters. Any technically feasible technique may be implemented to determine whether sufficient ambient illumination is available, including, but not limited to, techniques that are associated with a particular implementation of a given digital camera module.

In step **126**, the digital photographic system causes the digital camera module to sample an image based on current sampling parameters. In certain embodiments, a new set of sampling parameters may be determined based on the sampled image to be applied to sampling a subsequent image. For example, if the sampled image is under exposed, the new set of sampling parameters may provide for increased exposure time or an increased ISO value.

In step **128**, the digital photographic system stores the image in the image set. The image set may be stored within NV memory **316**, volatile memory **318**, or the image set may be stored to a remote storage system, such as through wireless unit **340.** Each image within the image set may be referred to herein as a source image.

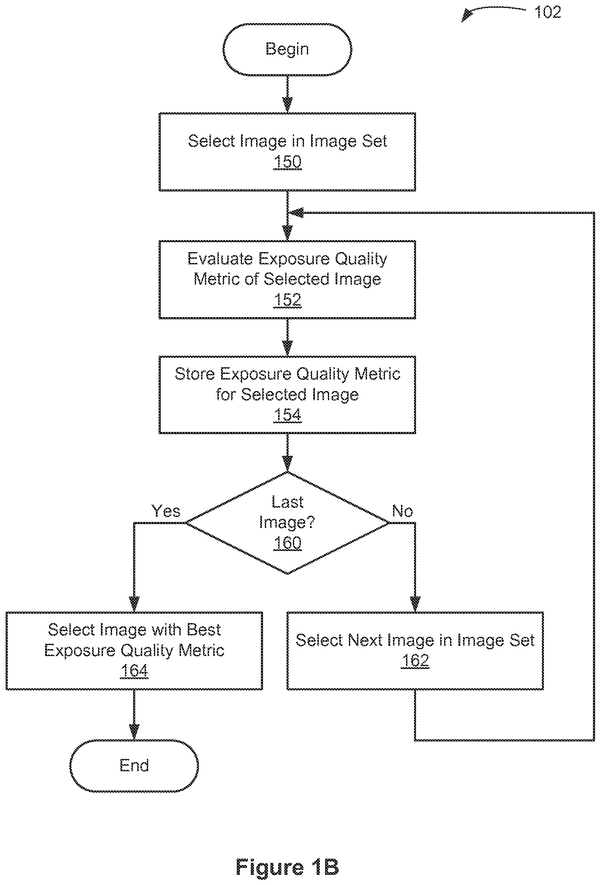

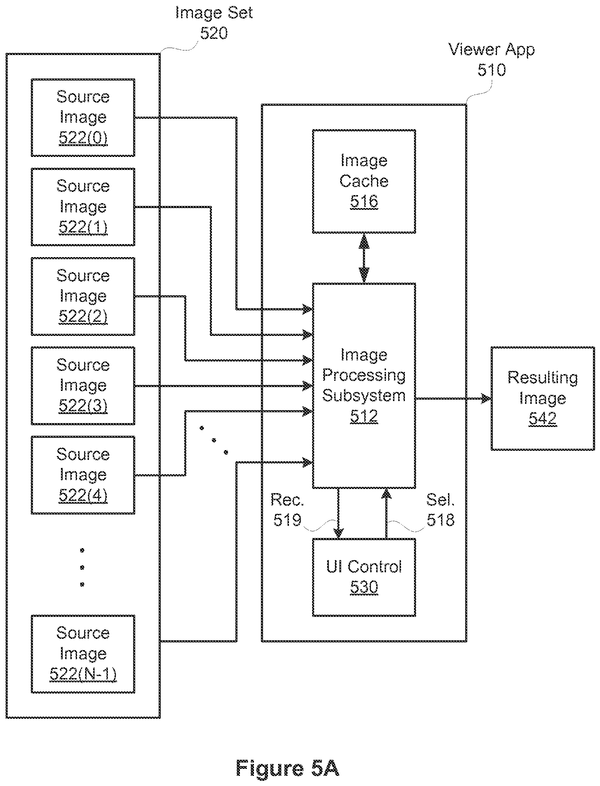

Returning to step **120**, if the last image for the image set has been sampled, then the method **100** proceeds to step **132**, where the digital photographic system disables the strobe unit. In step **134**, the digital photographic system evaluates images comprising the image set to select a recommended image from the image set having appropriate exposure. In one embodiment, step **134** comprises method **102** of Figure **1B****.** In step **136**, the digital photographic system displays the recommended image. As discussed below in Figures **5A** through **5C**, a user may select a different image within the image set than the recommended image.

In an alternative embodiment, an exposure quality metric, described below in Figure **1B**, is evaluated and stored in step **128** for a corresponding image sampled in step **126.** In step **134**, a recommended image is selected from the image set based on at least one exposure quality metric associated with each image in the image set. For example, if the exposure quality metric is defined to be a cost function that assigns an increasing cost penalty to increasingly undesirable exposures, then the recommended image is selected to have the lowest corresponding cost penalty (exposure quality metric) among the images in the image set.

Figure **1B** illustrates a flow chart of a method **102** for selecting one image from an image set based on exposure quality, in accordance with one embodiment. Although method **102** is described in conjunction with the systems of Figures **2A-3B**, persons of ordinary skill in the art will understand that any system that performs method **102** is within the scope of embodiments of the present invention, as defined by the appended claims. In one embodiment, a digital photographic system, such as digital photographic system **300** of Figure **3A**, is configured to perform method **102**. The digital photographic system may be implemented within a digital camera, such as digital camera **202** of Figure **2A**, or a mobile device, such as mobile device **204** of Figure **2B****.**

Method **102** begins in step **150**, where the digital photographic system selects an image in the image set of Figure **1B**. In one embodiment, the image set is organized as an ordered sequence of images, and the selected image comprises a first image of the ordered sequence of images. In step **152**, the digital photographic system evaluates exposure quality of the selected image. In one embodiment, a cost function that assigns a high cost penalty to over-exposed pixels within the selected image may be implemented to evaluate an exposure quality metric. The cost function may assign a constant cost penalty to each over-exposed pixel or a progressively increasing cost function based on a count for over-exposed pixels within the selected image. Any other technically feasible technique for evaluating an exposure quality metric may also be implemented without departing the scope and spirit of the present invention.

In step **154**, the digital photographic system stores the exposure quality metric associated with the selected image. If, in step **160**, the selected image is not the last image within the image set to be selected and evaluated, then the method proceeds to step **162**, where the digital photographic system selects a next image in the image set before proceeding back to step **152.**

Returning to step **160**, if the selected image is the last image within the image set to be selected and evaluated, then the method proceeds to step **164**, where the digital photographic system selects an image within the image set having the best exposure quality metric. For example, if the exposure quality metric is defined to be a cost function configured to assign an increasingly higher cost to increasingly undesirable exposures, then an image is selected to have the lowest corresponding cost (exposure quality metric) among the images in the image set. The selected image in this step may comprise a recommended image.

Figure **2A** illustrates a digital camera **202**, configured to implement one or more aspects of the present invention. Digital camera **202** includes a digital photographic system, such as digital photographic system **300** of Figure **3A**, configured to generate an image set by sampling a photographic scene as described in conjunction with method **100** of Figure **1A****.** A digital camera unit within the digital photographic system is coupled to a lens **230**, through which each image comprising the image set is sampled.

Digital camera **202** includes a strobe unit **236**, and may include a shutter release button **215** for triggering a photographic sample event, whereby digital camera **202** samples two or more images comprising an image set. Any other technically feasible shutter release command may trigger the photographic sample event, such as a timer trigger or remote control receiver configured to generate a shutter release command. Embodiments of the present invention advantageously enable a user to photograph a scene using a single shutter release command, and subsequently select an image sampled according to a strobe intensity that best satisfies user aesthetic requirements for the photographic scene. In contrast, a conventional digital camera typically samples a single image illuminated by strobe illumination per shutter release trigger, commonly forcing the user to either manually photograph the photographic scene multiple times, or to suffer poor image quality resulting over-exposure or under-exposure.

Figure **2B** illustrates a mobile device **204**, configured to implement one or more aspects of the present invention. Mobile device **204** includes a digital photographic system, such as digital photographic system **300** of Figure **3A**, configured to generate an image set by sampling a scene as described in conjunction with method **100** of Figure **1A****.** A shutter release command may be generated through a mechanical button or a virtual button, which may be activated by a touch gesture on a touch entry display system **240** within mobile device **204.**

In one embodiment, the touch entry display system **240** is disposed on the opposite side of mobile device **204** relative to the lens **230.** In certain embodiments, the mobile device **204** includes a user-facing digital camera coupled to lens **232** and a user-facing strobe unit. The user-facing digital camera and user-facing strobe unit are configured to sample an image set in accordance with method **100** of Figure **1A****.**

Figure **3A** illustrates a digital photographic system **300**, configured to implement one or more aspects of the present invention. Digital photographic system **300** includes a processor complex **310** coupled to a camera module **330** and a strobe unit **336.** Digital photographic system **300** may also include, without limitation, a display unit **312**, a set of input/output devices **314**, non-volatile memory **316**, volatile memory **318**, a wireless unit **340**, and sensor devices **342**, each coupled to processor complex **310.** In one embodiment, a power management subsystem **320** is configured to generate appropriate power supply voltages for each electrical load element within digital photographic system **300**. A battery **322** may be configured to supply electrical energy to power management subsystem **320.** Battery **322** may implement any technically feasible energy storage system, including primary or rechargeable battery technologies. In one embodiment, lens **230** of Figures **2A** and **2B** is coupled to camera module **330,** and strobe unit **236** comprises strobe unit **336.**

In one embodiment, strobe unit **336** is integrated into digital photographic system **300** and configured to provide strobe illumination **350** during an image sample event performed by digital photographic system **300.** In an alternative embodiment, strobe unit **336** is implemented as an independent device from digital photographic system **300** and configured to provide strobe illumination **350** during an image sample event performed by digital photographic system **300.** Strobe unit **336** may comprise one or more LED devices. In certain embodiments, two or more strobe units are configured to synchronously generate strobe illumination in conjunction with sampling an image.

In one embodiment, strobe unit **336** is directed through a strobe control signal **338** to either emit strobe illumination **350** or not emit strobe illumination **350.** The strobe control signal **338** may implement any technically feasible signal transmission protocol. Strobe control signal **338** may indicate a strobe parameter, such as strobe intensity or strobe color, for directing strobe unit **336** to generate a specified intensity and/or color of strobe illumination **350.** As shown, strobe control signal **338** may be generated by processor complex **310.** Alternatively, strobe control signal **338** may be generated by camera module **330** or by any other technically feasible system element.

In one usage scenario, strobe illumination **350** comprises at least a portion of overall illumination in a photographic scene being photographed by camera module **330.** Optical scene information **352**, which may include strobe illumination **350** reflected from objects in the photographic scene, is focused as an optical image onto an image sensor **332**, within camera module **330.** image sensor **332** generates an electronic representation of the optical image. The electronic representation comprises spatial color intensity information, which may include different color intensity samples, such as for red, green, and blue light. The spatial color intensity information may also include samples for white light. Alternatively, the color intensity samples may include spatial color intensity information for cyan, magenta, and yellow light. Persons skilled in the art will recognize that other and further sets of spatial color intensity information may be implemented. The electronic representation is transmitted to processor complex **310** via interconnect **334**, which may implement any technically feasible signal transmission protocol.

Input/output devices **314** may include, without limitation, a capacitive touch input surface, a resistive tablet input surface, one or more buttons, one or more knobs, light-emitting devices, light detecting devices, sound emitting devices, sound detecting devices, or any other technically feasible device for receiving user input and converting the input to electrical signals, or converting electrical signals into a physical signal. In one embodiment, input/output devices **314** include a capacitive touch input surface coupled to display unit **312.**

Non-volatile (NV) memory **316** is configured to store data when power is interrupted. In one embodiment, NV memory **316** comprises one or more flash memory devices. NV memory **316** may be configured to include programming instructions for execution by one or more processing units within processor complex **310.** The programming instructions may implement, without limitation, an operating system (OS), UI modules, image processing and storage modules, one or more modules for sampling an image set through camera module **330**, one or more modules for presenting the image set through display unit **312**. The programming instructions may also implement one or more modules for merging images or portions of images within the image set, aligning at least portions of each image within the image set, or a combination thereof. One or more memory devices comprising NV memory **316** may be packaged as a module configured to be installed or removed by a user. In one embodiment, volatile memory **318** comprises dynamic random access memory (DRAM) configured to temporarily store programming instructions, image data such as data associated with an image set, and the like, accessed during the course of normal operation of digital photographic system **300.**

Sensor devices **342** may include, without limitation, an accelerometer to detect motion and/or orientation, an electronic gyroscope to detect motion and/or orientation, a magnetic flux detector to detect orientation, a global positioning system (GPS) module to detect geographic position, or any combination thereof.

Wireless unit **340** may include one or more digital radios configured to send and receive digital data. In particular, wireless unit **340** may implement wireless standards known in the art as "WiFi" based on Institute for Electrical and Electronics Engineers (IEEE) standard 802.11, and may implement digital cellular telephony standards for data communication such as the well-known "3G" and "4G" suites of standards. Wireless unit **340** may further implement standards and protocols known in the art as LTE (long term evolution). In one embodiment, digital photographic system **300** is configured to transmit one or more digital photographs, sampled according to techniques taught herein, to an online or "cloud-based" photographic media service via wireless unit **340.** The one or more digital photographs may reside within either NV memory **316** or volatile memory **318.** In such a scenario, a user may possess credentials to access the online photographic media service and to transmit the one or more digital photographs for storage and presentation by the online photographic media service. The credentials may be stored or generated within digital photographic system **300** prior to transmission of the digital photographs. The online photographic media service may comprise a social networking service, photograph sharing service, or any other network-based service that provides storage and transmission of digital photographs. In certain embodiments, one or more digital photographs are generated by the online photographic media service based on an image set sampled according to techniques taught herein. In such embodiments, a user may upload source images comprising an image set for processing by the online photographic media service.

In one embodiment, digital photographic system **300** comprises a plurality of camera modules **330.** Such an embodiment also includes at least one strobe unit **336** configured to illuminate a photographic scene, sampled as multiple views by the plurality of camera modules **330.** The plurality of camera modules **330** may be configured to sample a wide angle view (greater than forty-five degrees of sweep among cameras) to generate a panoramic photograph. The plurality of camera modules **330** may also be configured to sample two or more narrow angle views (less than forty-five degrees of sweep among cameras) to generate a stereoscopic photograph.

Display unit **312** is configured to display a two-dimensional array of pixels to form an image for display. Display unit **312** may comprise a liquid-crystal display, an organic LED display, or any other technically feasible type of display. In certain embodiments, display unit **312** is able to display a narrower dynamic range of image intensity values than a complete range of intensity values sampled over a set of two or more images comprising the image set. Here, images comprising the image set may be merged according to any technically feasible HDR blending technique to generate a synthetic image for display within dynamic range constraints of display unit **312.** In one embodiment, the limited dynamic range specifies an eight-bit per color channel binary representation of corresponding color intensities. In other embodiments, the limited dynamic range specifies a twelve-bit per color channel binary representation.

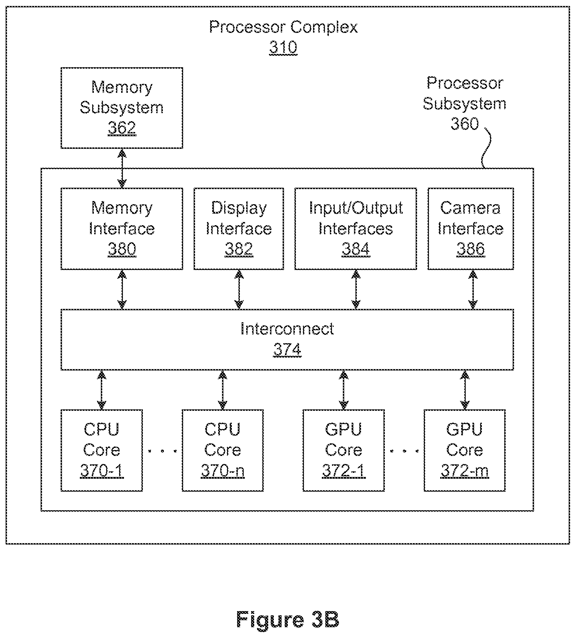

Figure **3B** illustrates a processor complex **310** within digital photographic system **300** of Figure **3A**, according to one embodiment of the present invention. Processor complex **310** includes a processor subsystem **360** and may include a memory subsystem **362.** In one embodiment, processor complex **310** comprises a system on a chip (SoC) device that implements processor subsystem **360**, and memory subsystem **362** comprising one or more DRAM devices coupled to processor subsystem **360.** In one implementation of the embodiment, processor complex **310** comprises a multi-chip module (MCM) encapsulating the SoC device and the one or more DRAM devices.

Processor subsystem **360** may include, without limitation, one or more central processing unit (CPU) cores **370**, a memory interface **380**, input/output interfaces unit **384**, and a display interface unit **382**, each coupled to an interconnect **374.** The one or more CPU cores **370** may be configured to execute instructions residing within memory subsystem **362**, volatile memory **318**, NV memory **316**, or any combination thereof. Each of the one or more CPU cores **370** may be configured to retrieve and store data via interconnect **374** and memory interface **380.** Each of the one or more CPU cores **370** may include a data cache, and an instruction cache. Two or more CPU cores **370** may share a data cache, an instruction cache, or any combination thereof. In one embodiment, a cache hierarchy is implemented to provide each CPU core **370** with a private cache layer, and a shared cache layer.

Processor subsystem **360** may further include one or more graphics processing unit (GPU) cores **372.** Each GPU core **372** comprises a plurality of multi-threaded execution units that may be programmed to implement graphics acceleration functions. GPU cores **372** may be configured to execute multiple thread programs according to well-known standards such as OpenGL ™, OpenCL™, CUDA™, and the like. In certain embodiments, at least one GPU core **372** implements at least a portion of a motion estimation function, such as a well-known Harris detector or a well-known Hessian-Laplace detector. Such a motion estimation function may be used for aligning images or portions of images within the image set.

interconnect **374** is configured to transmit data between and among memory interface **380**, display interface unit **382**, input/output interfaces unit **384**, CPU cores **370**, and GPU cores **372.** interconnect **374** may implement one or more buses, one or more rings, a cross-bar, a mesh, or any other technically feasible data transmission structure or technique. Memory interface **380** is configured to couple memory subsystem **362** to interconnect **374.** Memory interface **380** may also couple NV memory **316**, volatile memory **318**, or any combination thereof to interconnect **374.** Display interface unit **382** is configured to couple display unit **312** to interconnect **374.** Display interface unit **382** may implement certain frame buffer functions such as frame refresh. Alternatively, display unit **312** may implement frame refresh. Input/output interfaces unit **384** is configured to couple various input/output devices to interconnect **374.**

In certain embodiments, camera module **330** is configured to store exposure parameters for sampling each image in an image set. When directed to sample an image set, the camera module **330** samples the image set according to the stored exposure parameters. A software module executing within processor complex **310** may generate and store the exposure parameters prior to directing the camera module **330** to sample the image set.

In other embodiments, camera module **330** is configured to store exposure parameters for sampling an image in an image set, and the camera interface unit **386** within the processor complex **310** is configured to cause the camera module **330** to first store exposure parameters for a given image comprising the image set, and to subsequently sample the image. In one embodiment, exposure parameters associated with images comprising the image set are stored within a parameter data structure. The camera interface unit **386** is configured to read exposure parameters from the parameter data structure for a given image to be sampled, and to transmit the exposure parameters to the camera module **330** in preparation of sampling an image. After the camera module **330** is configured according to the exposure parameters, the camera interface unit **386** directs the camera module **330** to sample an image. Each image within an image set may be sampled in this way. The data structure may be stored within the camera interface unit **386**, within a memory circuit within processor complex **310**, within volatile memory **318**, within NV memory **316**, or within any other technically feasible memory circuit. A software module executing within processor complex **310** may generate and store the data structure.

In one embodiment, the camera interface unit **386** transmits exposure parameters and commands to camera module **330** through interconnect **334.** In certain embodiments, the camera interface unit **386** is configured to directly control the strobe unit **336** by transmitting control commands to the strobe unit **336** through strobe control signal **338.** By directly controlling both the camera module **330** and the strobe unit **336**, the camera interface unit **386** may cause the camera module **330** and the strobe unit **336** to perform their respective operations in precise time synchronization. In this context, synchronization applies to coordinating at least method steps **122, 124,** and **126** of method **100.** That is, synchronizing the steps of configuring the camera module **330** prior to sampling an image, configuring the strobe unit **336** to generate appropriate strobe illumination, and directing the camera module **330** to sample a photographic scene subjected to strobe illumination.

Additional set-up time or execution time associated with each step may reduce overall sampling performance. Therefore, a dedicated control circuit, such as the camera interface unit **386**, may be implemented to substantially minimize set-up and execution time associated with each step and any intervening time between steps.

In other embodiments, a software module executing within processor complex **310** directs the operation and synchronization of camera module **330** and the strobe unit **336**, with potentially reduced performance.

In one embodiment, camera interface unit **386** is configured to accumulate statistics while receiving image data from the camera module **330.** In particular, the camera interface unit **386** may accumulate exposure statistics for a given image while receiving image data for the image through interconnect **334**. Exposure statistics may include an intensity histogram, a count of over-exposed pixels, a counter of under-exposed pixels, an intensity-weighted sum of pixel intensity, or any combination thereof. The camera interface unit **386** may present the exposure statistics as memory-mapped storage locations within a physical or virtual address space defined by a processor, such as a CPU core **370**, within processor complex **310.**

In certain embodiments, camera interface unit **386** accumulates color statistics for estimating scene white-balance. Any technically feasible color statistics may be accumulated for estimating white balance, such as a sum of intensities for different color channels comprising red, green, and blue color channels. The sum of color channel intensities may then be used to perform a white-balance color correction on an associated image, according to a white-balance model such as a gray-world white-balance model. In other embodiments, curve-fitting statistics are accumulated for a linear or a quadratic curve fit used for implementing white-balance correction on an image. In one embodiment, camera interface unit **386** accumulates spatial color statistics for performing color-matching between or among images, such as between or among an ambient image and one or more images sampled with strobe illumination. As with the exposure statistics, the color statistics may be presented as memory-mapped storage locations within processor complex **310.**

In one embodiment, camera module **330** transmits strobe control signal 338 to strobe unit **336**, enabling strobe unit **336** to generate illumination while the camera module **330** is sampling an image. In another embodiment, camera module **330** samples an image illuminated by strobe unit **336** upon receiving an indication from camera interface unit **386** that strobe unit **336** is enabled. In yet another embodiment, camera module **330** samples an image illuminated by strobe unit **336** upon detecting strobe illumination within a photographic scene via a rapid rise in scene illumination.

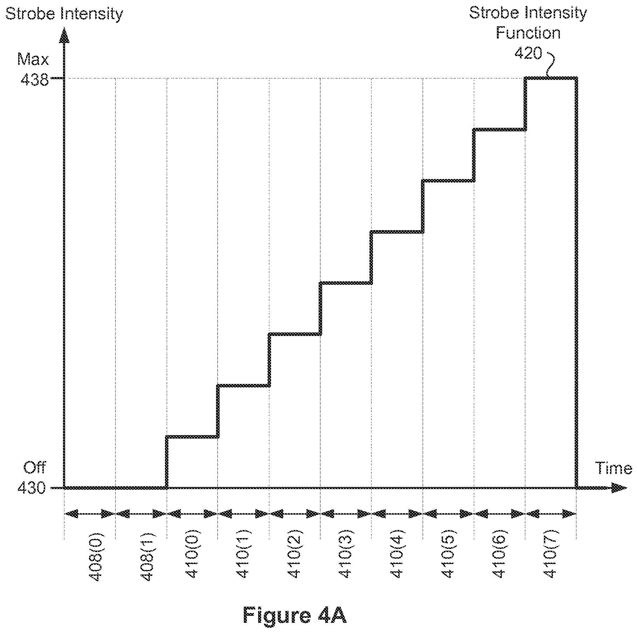

Figure **4A** illustrates a linear profile for a strobe intensity function **420** associated with sampling an image set, in accordance with one embodiment. The strobe intensity function **420** represents average strobe intensity during an exposure time for an image sampled within a corresponding time interval **410.** Strobe intensity may vary between off **430** and a maximum intensity **438.** The maximum intensity **438** is a characteristic of a given implementation of a strobe unit, such as strobe unit **336** of Figure **3A****.** Strobe intensity function **420** is depicted herein as scaled according to the maximum intensity **438.**

As shown, the strobe intensity function **420** includes a set of increasing strobe intensity values up to and including maximum intensity **438.** An image comprising the image set may be sampled during each time interval **410** under strobe illumination. An image, such as an ambient image, may also be sampled during a time interval **408** prior to time interval **410(0).** In one embodiment, sequential images comprising the image set are sampled in sequential time intervals **410.** While each time interval **408**, **410** is shown to be of substantially equal duration, each time interval **408**, **410** may vary.

In one embodiment, steps **122**, **124**, **126**, and **128** of method **100** are performed for each time interval **410.** Steps **132**, **134**, and **136** may be performed subsequent to time interval **410(7)**, or more generally, subsequent to a final time interval for a given image set.

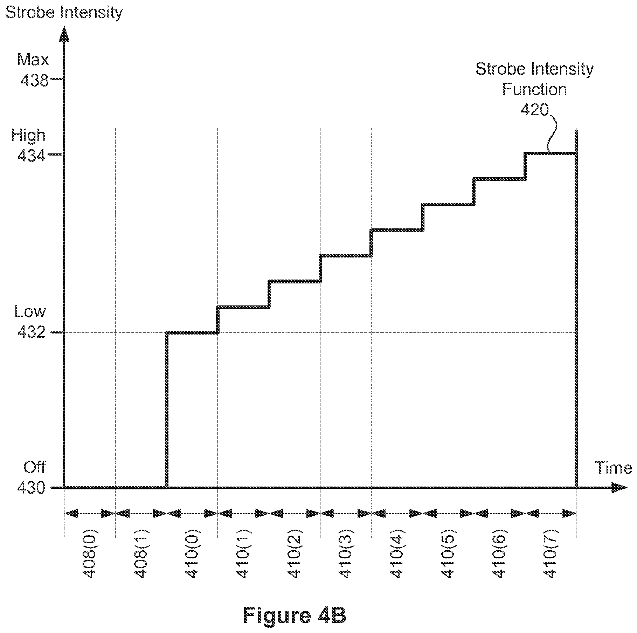

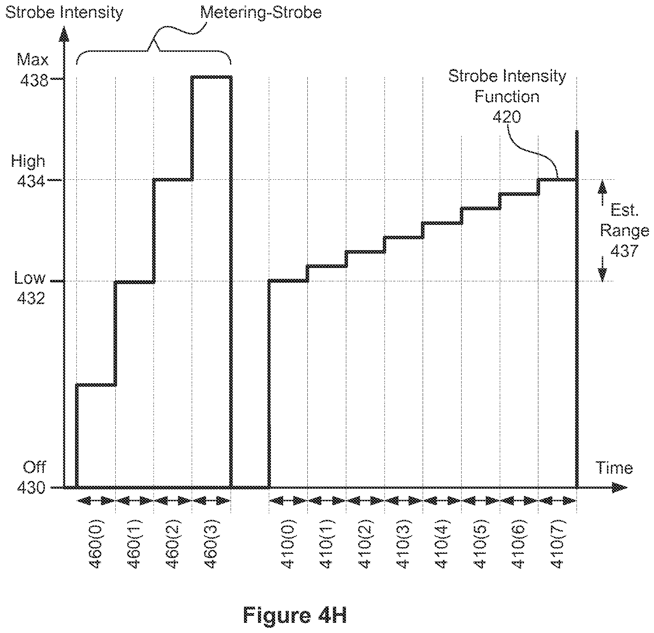

Figure **4B** illustrates a range-limited profile for a strobe intensity function **420** associated with sampling an image set, in accordance with one embodiment. As shown, the range-limited profile modifies the strobe intensity function **420** relative to Figure **4A** by limiting the total range of strobe intensity between a low intensity value **432** and a high intensity value **434.** By limiting the strobe intensity range, finer strobe intensity resolution within a range estimated to be appropriate for a given photographic scene may be available within images comprising the image set. The low intensity value **432** and the high intensity value **434** may be determined using any technically feasible technique, such as through a metering-strobe technique illustrated below in Figure **4H****.** In certain operating modes, such as a portrait photographic mode, the high intensity value **434** is constrained based on ambient illumination within a photographic scene. Constraining the high intensity value **434** based on ambient illumination may avoid excessive strobe intensity, which may be unpleasant to persons being subjected to the strobe illumination. The low intensity value **432** may then be determined to provide an appropriate range of strobe intensity for images within the image set.

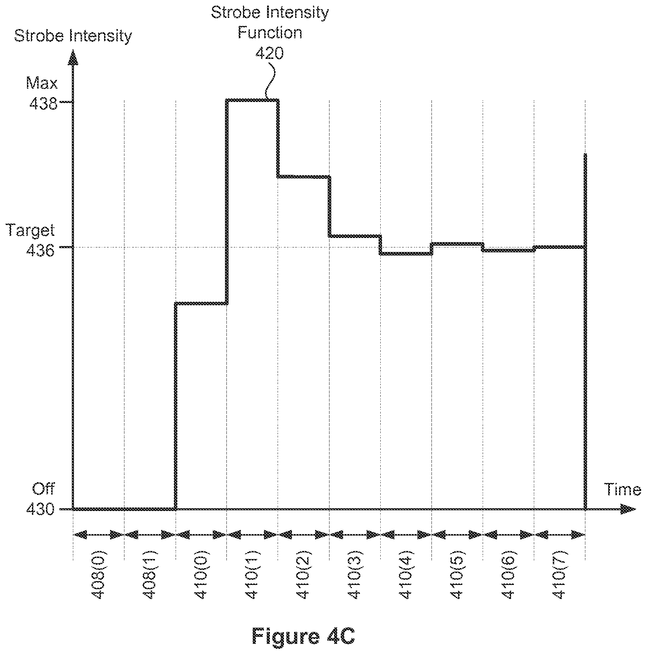

Figure **4C** illustrates an adaptive profile for a strobe intensity function **420** associated with sampling an image set, in accordance with one embodiment. As shown, the adaptive profile modifies the strobe intensity function **420** relative to Figure **4A** by adaptively determining a subsequent strobe intensity value based on at least one previously sampled image. By adaptively determining a subsequent strobe intensity value for sequentially sampled images, a final image may be sampled having a target intensity value **436** that provides an estimated proper strobe exposure for the final image. In one embodiment, adaptively determining a subsequent strobe intensity value is performed during step **122** of method **100.**

Estimating proper strobe exposure may be performed using any technically feasible techniques, including techniques that attempt to minimize over-exposed pixels while maximizing the strobe intensity. As shown, the strobe intensity function **420** represent an exemplary binary-style search performed to minimize over-exposed pixels in sequential time intervals **410** to converge on a target intensity value **436** that provides a minimum of over-exposed pixels while maximizing strobe intensity.

In certain embodiments, camera interface unit **386** is configured to generate exposure statistics, which are analyzed to adaptively determine a subsequent strobe intensity. For example, strobe intensity function **420** may follow a binary search profile, with strobe intensity modulated based on a count of over-exposed pixels and/or under-exposed pixels. Alternatively, the strobe intensity may be modulated according to the binary search profile based on an intensity histogram, which indicates general over-exposure, general under-exposure, and median intensity.

In one embodiment, images comprising the image set are ordered sequentially in sorted order according to strobe intensity. The images within the image set may then be viewed according to a monotonic strobe intensity, which may provide a more intuitive depiction of the strobe intensity range. Any technically feasible technique may be implemented to order the images according to monotonic strobe intensity. For example, image order within the image set may be represented as a sorted list of strobe intensity, whereby each element of the sorted list includes a reference to a corresponding image. Sequentially referencing images within the image set may therefore be performed by sequentially accessing images referred to by list elements. In one embodiment, certain images that are excessively over-exposed or under-exposed may be discarded from the image set. In general, images within a given image set may be ordered according to a monotonic parameter sequence, such as an increasing strobe intensity sequence, regardless of a particular profile for strobe intensity function **420.**

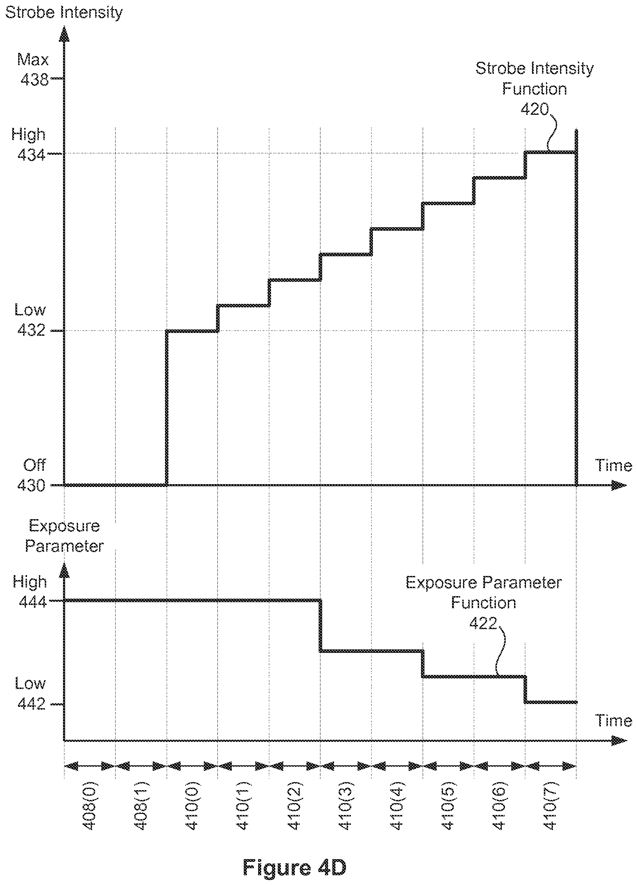

Figure **4D** illustrates a range-limited profile for a strobe intensity function **420** and a monotonic profile for an exposure parameter function **422** associated with sampling a set of digital photographs, in accordance with one embodiment. As shown, the range-limited profile for strobe intensity function **420** of Figure **4B** is executed in conjunction with exposure parameter function **422.** The exposure parameter function **422** may represent any exposure parameter over time intervals **408** and **410**. In one embodiment, the exposure parameter function **422** specifies exposure time varying between a high value **444** (longer exposure) to a low value **442** (shorter exposure).

The high value **444** and the low value **442** may each be selected using any technically feasible technique, In one embodiment, the high value **444** is selected to over-expose an ambient photographic scene, metered during time interval **408(0)**, by a predetermined amount. For example, the high value **444** may be selected over-expose the ambient photographic scene by one conventional photographic exposure stop. Similarly, the low value **442** may be selected to under-expose the ambient photographic scene by a predetermined amount, such as one conventional photographic exposure stop. Regions within the photographic scene predominantly illuminated by ambient illumination will be over-exposed in time interval **410(0)**, under-exposed in time interval **410(7)**, and properly-exposed mid-way between time intervals **410(0)** and **410(7)**. Sequential images within the image set corresponding to time intervals **410(0)** through **410(7)** will advantageously provide a range of exposure variation for both ambient-illuminated regions and strobe-illuminated regions.

In certain embodiments, two exposure parameters may be varied together in sequential time intervals. For example, exposure time may be reduced, while increasing sensor sensitivity to provide a trade-off between sensor image noise and blur due to motion in sequential images comprising the image set.

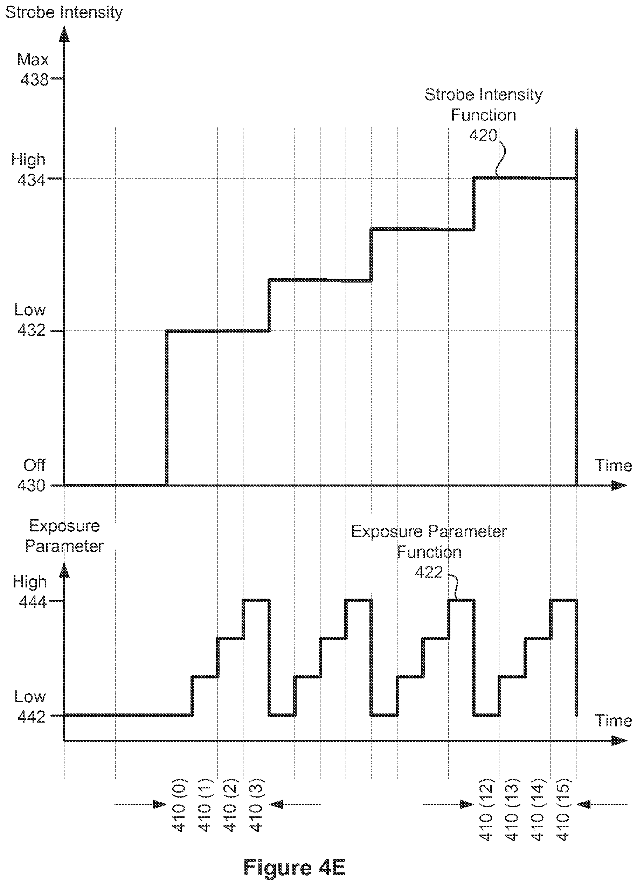

Figure **4E** illustrates a range-limited profile for a strobe intensity function **420** and a non-monotonic profile for an exposure parameter function **422** associated with sampling a set of digital photographs, in accordance with one embodiment. As shown, the range-limited profile for strobe intensity function **420** and exposure parameter function **422** of Figure **4D** are both modified to provide a two-dimensional sampling of both strobe intensity and an exposure parameter. For each strobe intensity value ranging between low intensity value **432** and high intensity value **434,** an image is sampled over each of four different exposure parameter values, as indicated by exposure parameter function **422.** Images within the image set may be displayed based on a combination of strobe intensity function **420** and exposure parameter function **422,** each separately selected. In this way, an image may be selected from the image set based on substantially separately varying strobe exposure and ambient exposure.

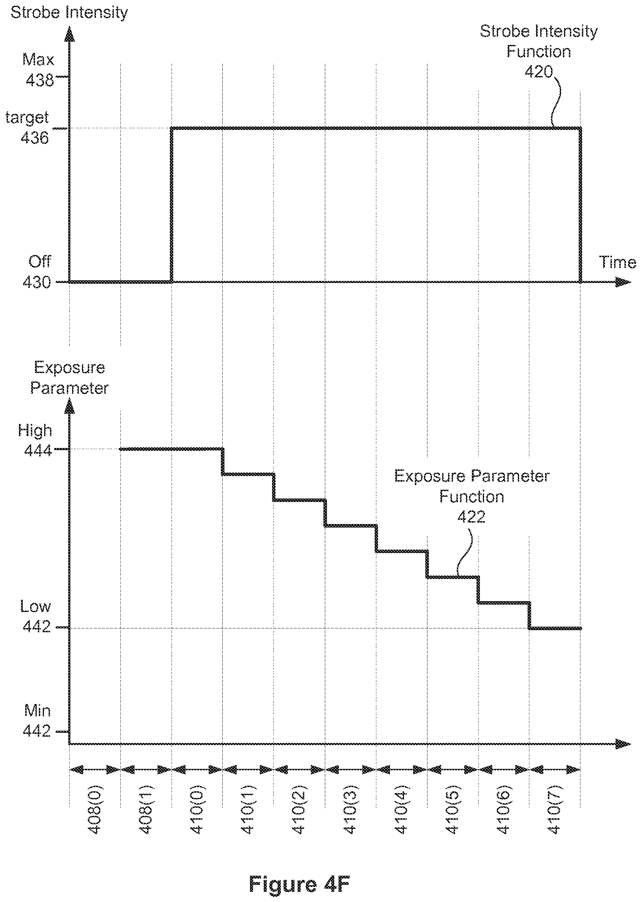

Figure **4F** illustrates a constant intensity profile for a strobe intensity function **420** and a monotonic profile for exposure parameter function **422** associated with sampling a set of digital photographs, in accordance with one embodiment. A shown, the strobe intensity profile indicates a substantially constant strobe intensity of target **436**, which may be determined using any technically feasible technique to sample images having proper exposure for regions within a photographic scene predominately illuminated by strobe illumination. The value of target **436** may be determined for an exposure parameter between low value **442** and high value **444** to ensure at least one of the images sampled during time intervals **410** may have proper exposure with respect to strobe illumination.

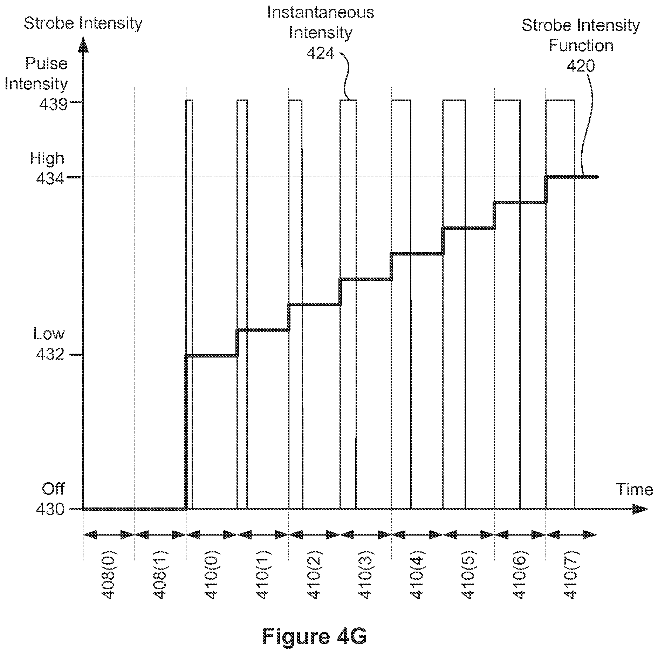

Figure **4G** illustrates a range-limited profile for a strobe intensity function **420** based on variable width pulses, in accordance with one embodiment. An instantaneous intensity **424** illustrates instantaneous strobe intensity as a function of time, while the strobe intensity function **420** represents average strobe intensity during an exposure time for an image sampled within a corresponding time interval **410.** Average strobe intensity corresponds to total accumulated instantaneous intensity **424** during a corresponding time interval **410.** As shown, the value of strobe intensity function **420** for a given time interval **410** is proportional to a pulse width of a pulse having pulse intensity **439**. In one embodiment, each pulse comprising the instantaneous intensity **424** is positioned in time to be within an exposure time for a corresponding image being sampled.

In one embodiment, the strobe unit **336** of Figure **3A** comprises a gas-discharge strobe, such as a xenon tube strobe, and pulse intensity **439** represents the instantaneous intensity of the gas-discharge strobe while actively firing. In one embodiment, time interval **410** represents less than a fifty-millisecond interval.

While a single pulse is shown here in conjunction with achieving a particular average strobe intensity, alternative embodiments may implement strobe intensity averaging over multiple pulses per time interval **410.** For example, an LED illuminator device may implement pulse-width modulation (PWM), or other average energy modulation techniques, to achieve a specified average strobe intensity. In such embodiments, multiple pulses should be generated during an associated exposure time. In general, an arbitrary function for instantaneous intensity **424** may be implemented to achieve an average strobe intensity during a given associated exposure time during a corresponding time interval **410.** For example, a smooth ramp may be implemented as a function for instantaneous intensity **424**, the smooth ramp providing increasing average strobe intensity for during sequential, equal time intervals **410**. In certain embodiments, strobe intensity is controlled by controlling a current source configured to drive an illuminator device. In other embodiments, strobe intensity is controlled using a feedback loop that adjusts current driving the illuminator device to match measured optical strobe intensity generated by the strobe unit.

Figure **4H** illustrates determining an intensity range for a range-limited profile, in accordance with one embodiment. Determining the range comprises sampling strobe exposure for a photographic scene subjected strobe illumination during metering-strobe time intervals **460**. Strobe intensity is varied during time intervals **460** to estimate the low intensity value **432,** below which the photographic scene is underexposed with respect to strobe illumination, and the high value, above which the photographic scene is over-exposed with respect to strobe illumination.

In one embodiment, the maximum intensity **438** is constrained based on ambient illumination rather than strobe unit capacity. In darker settings, the maximum intensity **438** is constrained to an intensity that a person will not find unpleasant. In brighter settings, the maximum intensity **438** may instead be constrained by strobe unit capacity.

In certain embodiments, a digital photographic system is configured to continuously sample ambient images within a circular buffer, and to identify a subset of the ambient images within the circular buffer to be stored as identified ambient images within the image set based on time proximity to a shutter release command. Upon receiving the shutter release command, the identified ambient images are associated with time intervals **408** of Figures **4A** through **4H****,** as though sampled according to steps **110** through **116** of method **100** of Figure **1A**. Method **100** may proceed to step **120** upon identifying the ambient images.

Figure **5A** illustrates a viewer application **510** configured to generate a resulting image **542** based on an image set **520,** in accordance with one embodiment.
The image set **520** includes two or more source images **522,** which may be generated by performing method **100** of Figure **1A**.

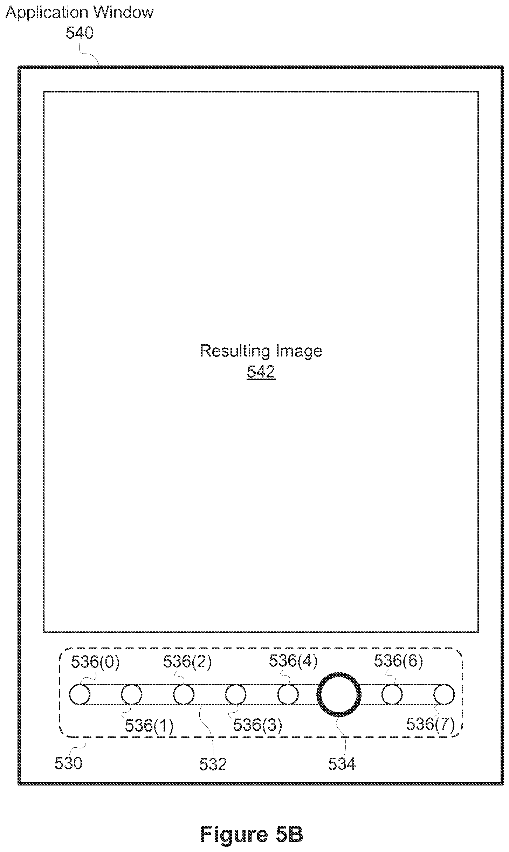

In one embodiment, the resulting image **542** represents a source image **522** that is selected from the image set **520.** The source image **522** may be selected according to any technically feasible technique. For example, a given source image **522** may be selected automatically based on based on exposure quality, as described previously in method **100** and in method **102** of Figure **1B**. Alternatively, a given source image **522** may be selected manually through a UI control **530,** discussed in greater detail below in Figure **5B**. The UI control **530** generates a selection parameter **518** that indicates the manual selection. An image processing subsystem **512** is configured to generate the resulting image **542** by either instantiating the selected source image **522** or marking the selected source image **522** within the image set **520** as the resulting image **542**. In certain embodiments, the image processing subsystem **512** automatically selects a source image and transmits a corresponding recommendation **519** to the UI control **530**. The recommendation **519** indicates, through the UI control **530,** which source image was automatically selected. A user may keep the recommendation or select a different source image to be the resulting image **542** using the UI control **530.**

In an alternative embodiment, viewer application **510** is configured to combine two or more source images **522** to generate a resulting image **542.** The two or more source images **522** may be mutually aligned by the image processing subsystem **512** prior to being combined. Selection parameter **518** may include a weight assigned to each of two source images **522.** The weight may be used to perform a transparency/opacity blend (known as an alpha blend) between two source images **522.**

In certain embodiments, source image **522(0)** is sampled under exclusively ambient illumination, with the strobe unit off. Source image **522(0)** is generated to be white-balanced, according to any technically feasible white balancing technique. Source images **522(1)** through **522(N-1)** are sampled under strobe illumination, which may be of a color that is discordant with respect to ambient illumination. Source images **522(1)** through **522(N-1)** may be white-balanced according to the strobe illumination color. Discordance in strobe illumination color may cause certain regions to appear incorrectly colored with respect to other regions in common photographic settings. For example, in a photographic scene with foreground subjects predominantly illuminated by white strobe illumination and white-balanced accordingly, background subjects that are predominantly illuminated by incandescent lights may appear excessively orange or even red. In one embodiment, spatial color correction is implemented within image processing subsystem **512** to match the color of regions within a selected source image **522** to that of source image **522(0)**. Spatial color correction implements regional color-matching to ambient-Illuminated source image **522(0)**. The regions may range in overall scene coverage from individual pixels, to blocks of pixels, to whole frames. In one embodiment, each pixel in a color-corrected image includes a weighted color correction contribution from at least a corresponding pixel and an associated block of pixels.

In certain implementations, viewer application **510** includes an image cache **516,** configured to include a set of cached images corresponding to the source images **522,** but rendered to a lower resolution than source images **522.** The image cache **516** provides images that may be used to readily and efficiently generate or display resulting image **542** in response to real-time changes to selection parameter **518.** In one embodiment, the cached images are rendered to a screen resolution of display unit **312.** When a user manipulates the UI control **530** to select a source image **522,** a corresponding cached image may be displayed on the display unit **312.** Caching source images **522** may advantageously reduce power consumption associated with rendering a given source image **522** for display. Caching source images **522** may also improve performance by eliminating a rendering process needed to resize a given source image **522** for display each time UI control **530** detects that a user has selected a different source image **522.**

Figure **5B** illustrates an exemplary user interface associated with the viewer application **510** of Figure **5A****,** in accordance with one embodiment. The user interface comprises an application window **540** configured to display the resulting image **542** based on a position of the UI control **530.** The viewer application **510** may invoke the UI control **530**, configured to generate the selection parameter **518** based on a position of a control knob **534.** The recommendation **519** may determine an initial position of the control knob **534,** corresponding to a recommended source image **522** within the image set **520**. In one embodiment, the UI control **530** comprises a linear slider control with a control knob **534** configured to slide along a slide path **532**. A user may position the control knob **534** by performing a slide gesture. For example, the slide gesture may include touching the control knob **534** in a current position, and sliding the control knob **534** to a new position. Alternatively, the user may touch along the slide path **532** to move the control knob **534** to a new position defined by a location of the touch.

In one embodiment, positioning the control knob **534** into a discrete position **536** along the slide path **532** causes the selection parameter **518** to indicate selection of a corresponding source image **522.** For example, a user may move control knob **534** into discrete position **536(3),** to indicate that source image **522(3)** is selected. The UI control **530** then generates selection parameter **518** to indicate that source image **522(3)** is selected. The image processing subsystem **512** responds to the selection parameter **518** by generating the resulting image **542** based on source image **522(3).** The control knob **534** may be configured to snap to a closest discrete position **536** when released by a user withdrawing their finger.

In an alternative embodiment, the control knob **534** may be positioned between two discrete positions **536** to indicate that resulting image **542** should be generated based on two source images **522** corresponding to the two discrete positions **536**. For example, if the control knob **534** is positioned between discrete position **536(3)** and discrete position **536(4)**, then the image processing subsystem **512** generates resulting image **542** from source images **522(3)** and **522(4).** In one embodiment, the image processing subsystem **512** generates resulting image **542** by aligning source images **522(3)** and **522(4)**, and performing an alpha-blend between the aligned images according to the position of the control knob **534.** For example, if the control knob **534** is positioned to be one quarter of the distance from discrete position **536(3)** to discrete position **536(4)** along slide path **532**, then an aligned image corresponding to source image **522(4)** may be blended with twenty-five percent opacity over a fully opaque aligned image corresponding to source image **522(3)**.

In one embodiment, UI control **530** is configured to include a discrete position **536** for each source image **522** within a given image set **520** being viewed. Each image set **520** stored within the digital photographic system **300** of Figure **3A** may include a different number of source images **522**, and UI control **530** may be configured to establish discrete positions **536** to correspond to the source images **522** for a given image set **520**.

In certain embodiments, the viewer application **510** may implement two or more independent UI controls. For example, the viewer application **510** may implement a first UI control to select a source image **522** according to strobe intensity, and a second UI control to select a source image **522** according to ambient exposure. The first UI control may select among different values of strobe intensity function **420** illustrated in Figure **4E**, while the second UI control may select among different values of exposure parameter function **422**. In this way, the viewer application **510** may enable a user to independently adjust exposure with respect to strobe intensity and exposure after an image set has been sampled. In one embodiment, another independent UI control is implemented to select among source images **522** sampled under different strobe illumination colors.

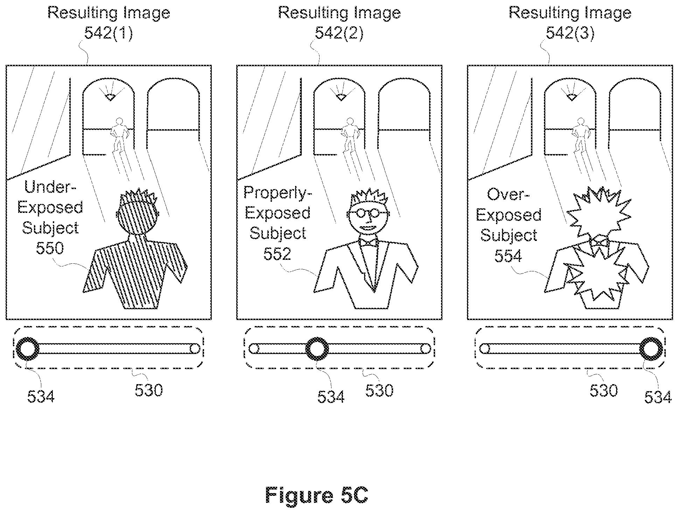

Figure **5C** illustrates a resulting image **542** with differing levels of strobe exposure, in accordance with one embodiment. In this example, control knob **534** is configured to select source images **522** of Figure **5A** sampled under increasing strobe intensity from left to right. When the control knob **534** is in the left-most position, the selected source image **522** may correspond to an image captured within time interval **410(0)** of Figure **4A****,** **4B****,** **4C****,** **4D****,** **4G**, or **4H**. With respect to Figure **4E**, the left-most control knob position may select a source image captured within time intervals **410(0)** through **410(3)**, with a specific source image **522** selected through a second UI control configured to select according to an exposure parameter. When the control knob **534** is in the right-most position, the selected source image **522** may correspond to an image captured within time interval **410(7)** of Figure **4A****,** **4B****,** **4D****,** **4G****, or** **4H****.** In the right-most position, the selected source image **522** may correspond to time interval **410(1)** of Figure **4C**, or time intervals **410(12)** through **410(15)** of Figure **4E****.**

As shown, resulting image **542(1)** includes an under-exposed subject **550** sampled under insufficient strobe intensity, resulting image **542(2)** includes a properly-exposed subject **552** sampled under appropriate strobe intensity, and resulting image **542(3)** includes an over-exposed subject **554** sampled under excessive strobe intensity. A determination of appropriate strobe intensity is sometimes subjective, and embodiments of the present invention advantageously enable a user to subjectively select an image having a desirable or appropriate strobe intensity after a picture has been taken, and without loss of image quality or dynamic range. In practice, a user is able to take what is apparently one photograph by asserting a single shutter-release. The single shutter-release causes the digital photographic system **300** of Figure **3A** to sample multiple images in rapid succession, where each of the multiple images is sampled under varying strobe intensity. In one embodiment, time intervals **410** of less than two-hundred milliseconds are defined herein to establish rapid succession. A resulting image set **520** enables the user to advantageously select a resulting image later, such as after a particular photographic scene of interest is no longer available. This is in contrast to prior art solutions that conventionally force a user to manually take different photographs and manually adjust strobe intensity over the different photographs. This manual prior art process typically introduces substantial inter-image delay, resulting in a loss of content consistency among sampled images.

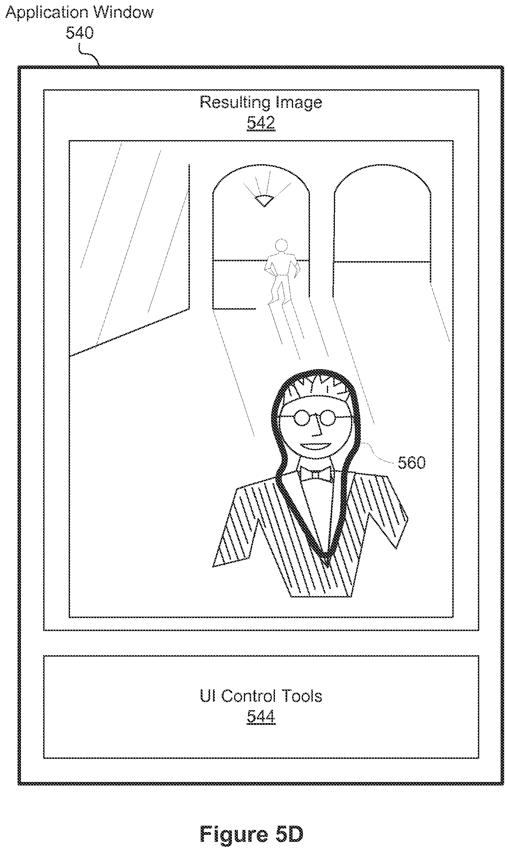

Figure **5D** illustrates a resulting image **542** generated from source images **522** and a selection depth map, in accordance with one embodiment. The source images **522** comprising an image set **520** are conceptually stacked in increasing depth, where depth corresponds to strobe intensity for a given source image **522.** Increasing depth therefore corresponds to increasing (or decreasing) strobe intensity. The selection depth map includes depth samples organized as a two-dimensional array that corresponds to pixels or regions comprising resulting image **542.** A depth value in this context acts similarly to selection parameter **518,** but just for a corresponding pixel or region. In certain embodiments, the source images **522** are aligned within the stack.

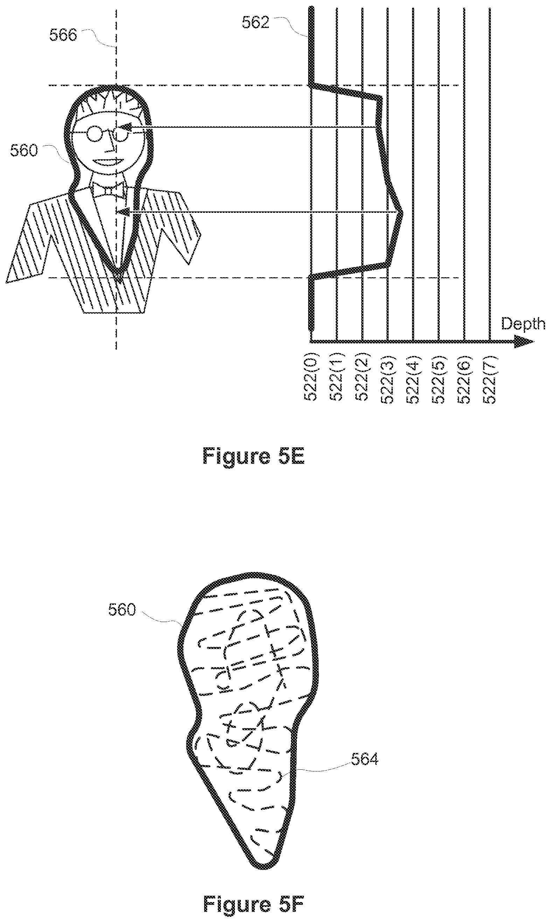

As shown, selection region **560** encompasses a portion of a foreground subject. Outside the selection region **560**, pixel data may be taken from source image **522(0)** and represented in the resulting image **542,** where source image **522(0)** corresponds to a minimum depth value. Inside the selection region **560,** pixel data may be taken from source images **522(1)** through **522(N-1)**, based on depth for a given pixel or region. Depth information comprising the selection depth map may be generated using any technically feasible technique. One technique is illustrated below in Figures **5E** and **5F****,** where swiping over a region multiple times increases a depth value for the region. In one embodiment, UI control tools **544** include a UI control that sets a minimum depth (minimum strobe intensity) for the selection depth map. UI control tools **544** may also include a UI control to clear the selection depth map.

Figure **5E** illustrates a selection depth map relative to a stack of source images **522,** in accordance with one embodiment. Depth values for the selection region **560** along an intersecting plane **566** are shown as a depth profile **562.** The depth profile **562** corresponds to sequentially organized source images **522(0)** through **522(7)** comprising a stack. A greater depth value along the depth profile **562** indicates a corresponding selection of a source image **522.** A fractional depth value may indicate selection of two source images **522** and a blend between two source images **522.**

Figure **5F** illustrates specifying a selection depth map, in accordance with one embodiment. As shown, a selection path **564** defines the selection region **560.** In one embodiment, a touch-input device is configured to track selection path **564,** which may be drawn by a user on the touch-input device. In one embodiment, a depth value for a given region is assigned a value that reflects an accumulation of selection path **564** intersections with the region. Depth values may accumulate according to any technically feasible technique. For example, depth values around the selection path **564** may accumulate according to a tapering region of influence about the selection path **564** to generate a field of depth samples resembling the effect of an air brush.

One advantage of the present invention is that a user may photograph a scene using a single shutter release command, and subsequently select an image sampled according to a strobe intensity that best satisfies user aesthetic requirements for the photographic scene. The one shutter release command causes a digital photographic system to rapidly sample a sequence of images with a range of strobe intensity and/or color. For example, twenty or more full-resolution images may be sampled within one second, allowing a user to capture a potentially fleeting photographic moment with the advantage of strobe illumination. Embodiments of the present invention advantageously enable a given digital photographic system to capture a nearly optimal image, among images within an image set, given implementation-specific limitations and/or capabilities of the digital photographic system. Furthermore, a user may select an image from the image set according to their subjective aesthetic assessment.

While various embodiments have been described above with respect to a digital camera 202 and a mobile device 204, any device configured to perform the method 100 of Figure 1A is within the scope of the present invention. In certain embodiments, two or more digital photographic systems implemented in respective devices are configured to sample corresponding image sets in mutual time synchronization. A single shutter release command may trigger the two or more digital photographic systems.

While the foregoing is directed to embodiments of the present invention, the scope thereof is determined by the claims that follow.

## Claims

1. A method (100) for generating an image set, comprising:
receiving (110) a shutter release command;
sampling (126) a first image of a photographic scene based on a first set of sampling parameters in response to the shutter release command, wherein the first set of sampling parameters specifies a first strobe intensity;
storing the first image within an image set;
sampling (126) a second image of the photographic scene based on a second set of sampling parameters in response to the shutter release command, wherein the second set of sampling parameters specifies a second strobe intensity; and
storing the second image within the image set,
wherein a strobe unit (336) is configured to generate strobe illumination within the photographic scene according to the first strobe intensity or the second strobe intensity, and
wherein the first strobe intensity (430) and the second strobe intensity (438) define an intensity range associated with a strobe intensity function (420), wherein the strobe intensity function represents strobe intensity versus time;
generating (122), using the strobe intensity function, a strobe intensity value based on the first and second images;
sampling (126), in response to the shutter release command, a third image of the photographic scene based on the generated strobe intensity value, during a third time interval;
storing the third image within the image set;
recommending (134) an image from the image set based on exposure quality metric values associated with images comprising the image set; and
displaying (136) the recommended image on a display unit (312),
wherein the exposure quality metric values are defined by a cost function that assigns an increasing cost penalty to increasingly undesirable exposures, wherein the cost function assigns a progressively increasing cost function based on a count for over-exposed pixels within the selected image, whereby the recommended image is selected to have the lowest corresponding cost penalty among the images in the image set,
wherein sampling (126) comprises generating a first image of a photographic scene during a first time interval (410₁) based on a first set of sampling parameters in response to the shutter release command, wherein the first set of sampling parameters specifies a first strobe intensity that is non-zero;
wherein sampling (126) comprises generating a second image of the photographic scene during a second time interval (4102) based on a second set of sampling parameters in response to the shutter release command, wherein the second set of sampling parameters specifies a second strobe intensity that is non-zero and different than the first strobe intensity;
wherein the strobe unit (336) is configured to generate strobe illumination within the photographic scene according to the first strobe intensity during the first time interval and the second strobe intensity during the second time interval.

2. The method (100) of claim 1, wherein the first set of sampling parameters specifies a first set of exposure parameters and the second set of sampling parameters specifies a second set of exposure parameters.

3. The method (100) of claim 2, wherein the first set of exposure parameters specifies a first exposure time, and the second set of exposure parameters specifies a second exposure time.

4. The method (100) of claim 3, wherein the first exposure time is equal to the second exposure time, and wherein the first exposure time is determined for the photographic scene with the strobe unit (336) disabled.

5. The method (100) of claim 1, wherein each exposure quality metric value comprises a count of over-exposed pixels for a corresponding image.

6. The method (100) of claim 1, wherein the second strobe intensity is adaptively determined based on at least one previously sampled image.

7. The method (100) of claim 1, wherein generating (116) the first image is associated with a first time interval of less than two-hundred milliseconds, and generating (126) the second image is associated with a second time interval of less than two-hundred milliseconds.

8. The method (100) of claim 1, wherein the strobe unit (336) comprises a light-emitting diode (LED), and strobe intensity is associated with average current driving the LED.

9. The method (100) of claim 1, wherein the strobe unit (336) comprises a Xenon tube, and strobe intensity is associated with pulse duration for the Xenon tube.

10. The method (100) of claim 1, wherein the strobe intensity value is generated for sequential images within the image set.

11. The method (100) of claim 1, further comprising:
aligning at least a portion of the first image (522) and the second image (522) within the image set; and
combining the first and second images to form a fourth image (542) within the image set.

12. A computer program product embodied in a non-transitory computer-readable medium that, when executed by a processor, causes the processor to generate an image set by performing the steps of any one of claims 1-11.

13. A photographic system, comprising:
a camera module (330), configured to sample a photographic scene according to exposure parameters included in a set of sampling parameters;
a strobe unit (336), configured to generate strobe illumination within the photographic scene according to strobe parameters included in the set of sampling parameters;
a processing unit (310), configured to generate an image set by performing the steps of any one of the claims 1-11.

## Patentansprüche

1. Verfahren (100) zum Generieren eines Bildsatzes, umfassend folgende Schritte:
Empfangen (110) eines Verschlussauslösebefehls;
Abtasten (126) eines ersten Bildes einer photographischen Szene basierend auf einem ersten Satz von Abtastparametern als Reaktion auf den Verschlussauslösebefehl, wobei der erste Satz von Abtastparametern eine erste Stroboskopintensität vorgibt;
Speichern des ersten Bildes in einem Bildsatz;
Abtasten (126) eines zweiten Bildes der photographischen Szene basierend auf einem zweiten Satz von Abtastparametern als Reaktion auf den Verschlussauslösebefehl, wobei der zweite Satz von Abtastparametern eine zweite Stroboskopintensität vorgibt; und
Speichern des zweiten Bildes in dem Bildsatz,
wobei eine Stroboskopeinheit (336) konfiguriert ist, um eine Stroboskopbeleuchtung in der photographischen Szene gemäß der ersten Stroboskopintensität oder der zweiten Stroboskopintensität zu generieren, und
wobei die erste Stroboskopintensität (430) und die zweite Stroboskopintensität (438) einen Intensitätsbereich definieren, der mit einer Stroboskopintensitätsfunktion (420) verknüpft ist, wobei die Stroboskopintensitätsfunktion die Stroboskopintensität gegen Zeit angibt;
Generieren (122), unter Verwendung der Stroboskopintensitätsfunktion, eines Stroboskopintensitätswertes basierend auf den ersten und zweiten Bildern;
Abtasten (126), als Reaktion auf den Verschlussauslösebefehl, eines dritten Bildes der photographischen Szene basierend auf dem generierten Stroboskopintensitätswert, während eines dritten Zeitintervalls;
Speichern des dritten Bildes in dem Bildsatz;
Empfehlen (134) eines Bildes aus dem Bildsatz basierend auf metrischen Werten der Belichtungsqualität, die mit Bildern verknüpft sind, die den Bildsatz umfassen; und
Anzeigen (136) des empfohlenen Bildes an einer Anzeigeeinheit (312),
wobei die metrischen Werte der Belichtungsqualität durch eine Kostenfunktion definiert werden, die eine zunehmende Kostenstrafe für zunehmend unerwünschte Belichtungen zuteilt, wobei die Kostenfunktion eine allmählich zunehmende Kostenfunktion basierend auf einer Zählung für überbelichtete Pixel in dem ausgewählten Bild zuteilt, wodurch das empfohlene Bild ausgewählt wird, um die geringste entsprechende Kostenstrafe unter den Bildern in dem Bildsatz zu haben,
wobei das Abtasten (126) das Generieren eines ersten Bildes einer photographischen Szene während eines ersten Zeitintervalls (410₁) basierend auf einem ersten Satz von Abtastparametern als Reaktion auf den Verschlussauslösebefehl umfasst, wobei der erste Satz von Abtastparametern eine erste Stroboskopintensität vorgibt, die ungleich null ist;
wobei das Abtasten (126) das Generieren eines zweiten Bildes der photographischen Szene während eines zweiten Zeitintervalls (410₂) basierend auf einem zweiten Satz von Abtastparametern als Reaktion auf den Verschlussauslösebefehl umfasst, wobei der zweite Satz von Abtastparametern eine zweite Stroboskopintensität vorgibt, die ungleich null und anders als die erste Stroboskopintensität ist;
wobei die Stroboskopeinheit (336) konfiguriert ist, um eine Stroboskopbeleuchtung in der photographischen Szene gemäß der ersten Stroboskopintensität während des ersten Zeitintervalls und gemäß der zweiten Stroboskopintensität während des zweiten Zeitintervalls zu generieren.

2. Verfahren (100) nach Anspruch 1, wobei der erste Satz von Abtastparametern einen ersten Satz von Belichtungsparametern vorgibt und der zweite Satz von Abtastparametern einen zweiten Satz von Belichtungsparametern vorgibt.

3. Verfahren (100) nach Anspruch 2, wobei der erste Satz von Belichtungsparametern eine erste Belichtungszeit vorgibt und der zweite Satz von Belichtungsparametern eine zweite Belichtungszeit vorgibt.

4. Verfahren (100) nach Anspruch 3, wobei die erste Belichtungszeit gleich der zweiten Belichtungszeit ist, und wobei die erste Belichtungszeit für die photographische Szene bestimmt wird, wobei die Stroboskopeinheit (336) deaktiviert ist.

5. Verfahren (100) nach Anspruch 1, wobei jeder metrische Wert der Belichtungsqualität eine Zählung von überbelichteten Pixeln für ein entsprechendes Bild umfasst.

6. Verfahren (100) nach Anspruch 1, wobei die zweite Stroboskopintensität basierend auf mindestens einem zuvor abgetasteten Bild adaptiv bestimmt wird.

7. Verfahren (100) nach Anspruch 1, wobei das Generieren (116) des ersten Bildes mit einem ersten Zeitintervall von weniger als zweihundert Millisekunden verknüpft ist, und das Generieren (126) des zweiten Bildes mit einem zweiten Zeitintervall von weniger als zweihundert Millisekunden verknüpft ist.

8. Verfahren (100) nach Anspruch 1, wobei die Stroboskopeinheit (336) eine Leuchtdiode (LED) umfasst, und die Stroboskopintensität mit einem durchschnittlichen Strom verknüpft ist, der die LED ansteuert.

9. Verfahren (100) nach Anspruch 1, wobei die Stroboskopeinheit (336) eine Xenon-Röhre umfasst, und die Stroboskopintensität mit der Impulsdauer für die Xenon-Röhre verknüpft ist.

10. Verfahren (100) nach Anspruch 1, wobei der Stroboskopintensitätswert für aufeinanderfolgende Bilder in dem Bildsatz generiert wird.

11. Verfahren (100) nach Anspruch 1, ferner umfassend folgende Schritte:
Ausrichten mindestens eines Teils des ersten Bildes (522) und des zweiten Bildes (522) in dem Bildsatz; und
Kombinieren des ersten und des zweiten Bildes, um ein viertes Bild (542) in dem Bildsatz zu bilden.

12. Computerprogrammprodukt, ausgebildet in einem nicht vorübergehenden computerlesbaren Medium, das bewirkt, wenn es von einem Prozessor ausgeführt wird, dass der Prozessor einen Bildsatz generiert, indem er die Schritte nach einem der Ansprüche 1 bis 11 ausführt

13. Photographisches System, umfassend:
ein Kameramodul (330), das konfiguriert ist, um eine photographische Szene gemäß Belichtungsparametern, die in einem Satz von Abtastparametern enthalten sind, abzutasten;
eine Stroboskopeinheit (336), die konfiguriert ist, um eine Stroboskopbeleuchtung in der photographischen Szene gemäß Stroboskopparametern, die in dem Satz von Abtastparametern enthalten sind, zu generieren;
eine Verarbeitungseinheit (310), die konfiguriert ist, um einen Bildsatz zu generieren, indem sie die Schritte nach einem der Ansprüche 1 bis 11 ausführt.

## Revendications

1. Procédé (100) de génération d'un ensemble d'images, comprenant de:
recevoir (110) une commande de déclencheur;
échantillonner (126) une première image d'une scène photographique sur la base d'un premier ensemble de paramètres d'échantillonnage en réponse à la commande de déclencheur, dans lequel le premier ensemble de paramètres d'échantillonnage spécifie une première intensité stroboscopique;
mémoriser la première image à l'intérieur d'un ensemble d'images;
échantillonner (126) une deuxième image de la scène photographique sur la base d'un deuxième ensemble de paramètres d'échantillonnage en réponse à la commande de déclencheur, dans lequel le deuxième ensemble de paramètres d'échantillonnage spécifie une deuxième intensité stroboscopique ; et
mémoriser la deuxième image à l'intérieur de l'ensemble,
dans lequel une unité stroboscopique (336) est configurée pour générer une illumination à l'intérieur de la scène photographique conformément à la première intensité stroboscopique ou la deuxième intensité stroboscopique, et
dans lequel la première intensité stroboscopique (430) et la deuxième intensité stroboscopique (438) définissent une plage d'intensité associée à une fonction d'intensité stroboscopique (420), dans lequel la fonction d'intensité stroboscopique représente l'intensité stroboscopique par rapport au temps;
générer (122) en utilisant la fonction d'intensité stroboscopique, une valeur d'intensité stroboscopique sur la base de la première et la deuxième image;
échantillonner (126), en réponse à la commande de déclencheur, une troisième image de la scène photographique sur la base de la valeur d'intensité stroboscopique générée, pendant un troisième intervalle de temps ;
mémoriser la troisième image à l'intérieur de l'ensemble d'images
recommander (134) une image provenant de l'ensemble d'images sur la base des valeurs métriques de qualité d'exposition associée aux images comprenant l'ensemble d'images ; et
afficher (136) l'image recommandée sur une unité d'affichage (312),
dans lequel les valeurs métriques de qualité d'exposition sont définies par une fonction de coût qui assigne un coût supplémentaire croissant aux expositions indésirables croissantes, dans lequel la fonction de coût assigne une fonction de coût croissante progressivement sur la base d'un comptage des pixels surexposés à l'intérieur de l'image sélectionnée , moyennant quoi l'image recommandée est sélectionnée pour avoir le coût supplémentaire correspondant le plus bas parmi les images dans l'ensemble d'images,
dans lequel l'échantillonnage (126) comprend la génération d'une première image d'une scène photographique pendant un premier intervalle de temps (410₁) sur la base d'un premier ensemble de paramètres d'échantillonnage en réponse à la commande de déclencheur , dans lequel le premier ensemble de paramètres d'échantillonnage spécifie une première intensité stroboscopique qui n'est pas zéro;
dans lequel l'échantillonnage (126) comprend la génération d'une deuxième image de la scène photographique pendant un deuxième intervalle de temps (410₂) sur la base d'un deuxième ensemble de paramètres d'échantillonnage en réponse à la commande de déclencheur, dans lequel le deuxième ensemble de paramètres d'échantillonnage spécifie une deuxième intensité stroboscopique qui n'est pas zéro et différente de la première intensité stroboscopique;
dans lequel l'unité stroboscopique (336) est configurée pour générer une illumination stroboscopique à l'intérieur de la scène photographique conformément à la première intensité stroboscopique pendant le premier intervalle de temps et la deuxième intensité stroboscopique pendant le deuxième intervalle de temps.

2. Procédé (100) selon la revendication 1, dans lequel le premier ensemble de paramètres d'échantillonnage spécifie un premier ensemble de paramètres d'exposition et le deuxième ensemble de paramètres d'échantillonnage spécifie un deuxième ensemble de paramètres d'exposition.

3. Procédé (100) selon la revendication 2, dans lequel le premier ensemble de paramètres d'exposition spécifie une première durée d'exposition, et le deuxième ensemble de paramètres d'exposition spécifie une deuxième durée d'exposition.

4. Procédé (100) selon la revendication 3, dans lequel la première durée d'exposition est égale à la deuxième durée d'exposition, et dans lequel la première durée d'exposition est déterminée pour la scène photographique avec l'unité stroboscopique (336) désactivée.

5. Procédé (100) selon la revendication 1, dans lequel chaque valeur métrique de qualité d'exposition comprend un comptage des pixels surexposés pour une image correspondante.

6. Procédé (100) selon la revendication 1, dans lequel la deuxième intensité stroboscopique est déterminée de manière adaptative sur la base d'au moins une image précédemment échantillonnée.

7. Procédé (100) selon la revendication 1, dans lequel la génération (116) de la première image est associée à un premier intervalle de temps de moins de deux cent millisecondes, et la génération (126) de la deuxième image est associée à un deuxième intervalle de temps de moins de deux cent millisecondes.

8. Procédé (100) selon la revendication 1, dans lequel l'unité stroboscopique (336) comprend une diode électroluminescente (LED), et une intensité stroboscopique est associée au courant moyen attaquant la LED.

9. Procédé (100) selon la revendication 1, dans lequel l'unité stroboscopique (336) comprend un tube xénon, et l'intensité stroboscopique est associée et à la durée d'impulsion pour le tube xénon.

10. Procédé (100) selon la revendication 1, dans lequel la valeur d'intensité stroboscopique est générée pour des images séquentielles à l'intérieur de l'ensemble d'images.

11. Procédé (100) selon la revendication 1 comprenant en outre de:
aligner au moins une partie de la première image (522) et de la deuxième image (522) à l'intérieur de l'ensemble d'images ; et
combiner la première et la deuxième image pour former une quatrième image (542) à l'intérieur de l'ensemble d'images.

12. Produit de programme informatique réalisé dans un support lisible par ordinateur non transitoire qui, lorsqu'il est exécuté par un processeur, amènent le processeur à générer un ensemble d'images en exécutant les étapes d'une quelconque des revendications 1-11.

13. Système photographique, comprenant :
un module de caméra (330), configuré pour échantillonner une scène photographique selon des paramètres d'exposition inclus dans un ensemble de paramètres d'échantillonnage;
une unité stroboscopique (336), configurée pour générer une illumination stroboscopique à l'intérieur de la scène photographique conformément aux paramètres stroboscopiques inclus dans l'ensemble de paramètres d'échantillonnage;
une unité de traitement (310), configurée pour générer un ensemble d'images en exécutant les étapes d'une quelconque des revendications 1-11.
